# EUROPÄISCHE PATENTSCHRIFT

(11) **EP 3 374 850 B1**
(45) Veröffentlichungstag und Bekanntmachung des Hinweises auf die Patenterteilung: **14.07.2021**
(21) Anmeldenummer: 16784187.3
(22) Anmeldetag: 19.10.2016
(51) Int. Cl.: G06F 3/0488

(54) **TASTATURAPPLIKATION FÜR EINE GERÄTEZUGRIFFSSOFTWARE**
KEYBOARD APPLICATION FOR DEVICE ACCESS SOFTWARE
APPLICATION DE CLAVIER POUR UN LOGICIEL D'ACCÈS À DES APPAREILS

(30) Priorität: 13.11.2015 DE 102015119609
(43) Veröffentlichungstag der Anmeldung: 19.09.2018
(73) Patentinhaber: Endress+Hauser Process Solutions AG, 4153 Reinach (CH)
(72) Erfinder: MAYER, Michael, 4104 Oberwil (CH); LUBER, Werner, 4123 Allschwil (CH); SOTRIFFER, Ingomar, 79588 Efriingen-Kirchen (DE)
(74) Vertreter: Andres, Angelika Maria
(86) Internationale Anmeldenummer: PCT/EP2016/075095
(87) Internationale Veröffentlichungsnummer: WO 2017/080768

(56) Entgegenhaltungen:
- WO-A1-2013/149883
- WO-A2-2005/031480
- US-A1- 2009 195 506
- US-A1- 2012 005 592
- Toyota USA: "2013 Avalon How-To: HDD Navigation - Input an Address | Toyota", , 28 January 2013 (2013-01-28), XP054979227, Retrieved from the Internet: URL:https://www.youtube.com/watch?v=PLSQab l-Xrs [retrieved on 2019-03-25]

## Beschreibung

Die Erfindung betrifft ein Verfahren zum Erfassen einer Eingabe in eine Benutzeroberfläche eines Treibers, wobei der Treiber in eine Gerätezugriffssoftware eingebunden ist, sowie eine Tastaturapplikation für eine Gerätezugriffssoftware. Des Weiteren betrifft die Erfindung eine Gerätezugriffssoftware, die auf einem Host installiert ist und mit der auf Komponenten eines Feldbussystems zugegriffen werden kann.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Die Parametrierung, Konfiguration und Zustandsüberwachung der Feldgeräte eines Feldbussystems erfolgt in der Regel mittels einer auf einem Host installierten Gerätezugriffssoftware. In der Regel umfasst die Gerätezugriffssoftware eine Mehrzahl von Treibern, mit denen auf die Komponenten des Feldbussystems zugegriffen werden kann. Über die Benutzeroberflächen der in die Gerätezugriffssoftware eingebundenen Treiber kann der Benutzer vom Host aus Eingaben tätigen und Parameterwerte setzen oder ändern. Die Gerätezugriffssoftware ist häufig auf Mobilgeräten installiert, beispielsweise auf Tablet-Computern, Mobiltelefonen oder PDAs. Zur Erfassung der Benutzereingaben wird auf dem Touchdisplay dieser Geräte eine virtuelle Tastatur angezeigt, über die der Benutzer in den entsprechenden Eingabefeldern der Benutzeroberfläche seine Eingaben vornehmen kann.

Die WO 2005/031489 A2 beschreibt eine beispielhafte Anwendung solcher in Gerätezugriffssoftware eingebundener Treiber in einem Feldbussystem.

In der WO 2013/149883 A1, in der US 2009/195506 A1 und in dem von Toyota USA veröffentlichten Video: "2013 Avalon How-To: HDD Navigation - Input an Address | Toyota", 28. Januar 2013, XP054979227 - gefunden im Internet am 25. März 2019: URL: https://www.youtube.com/watch?v=PLSQabl-Xrs, sowie US 2012/005592 A1 sind diverse Verfahren zur Anpassung des Tastenfelds virtueller Tastaturen beschrieben.

Es ist daher Aufgabe der Erfindung, die Eingabe des Benutzers in eine Benutzeroberfläche eines Treibers, der in eine Gerätezugriffssoftware eingebunden ist, komfortabler zu gestalten und an die Erfordernisse von Mobilgeräten anzupassen.

Gelöst wird diese Aufgabe durch die in den Ansprüchen 1, und 6 angegebenen Merkmale.

Vorteilhafte Weiterentwicklungen der Erfindung sind in den Unteransprüchen angegeben.

Ein Verfahren entsprechend den Ausführungsformen der Erfindung dient zum Erfassen einer Eingabe in eine Benutzeroberfläche eines Treibers entsprechend des Standards DTM, Device Type Manager, wobei der Treiber in eine Field Device Tool-, FDT, Rahmenapplikation eingebunden ist, mit der auf Komponenten eines Feldbussystems zugegriffen werden kann. Die Field Device Tool-Rahmenapplikation umfasst eine Tastaturapplikation zur Anzeige einer virtuellen Tastatur. Das Verfahren umfasst, wenn der Benutzer ein Eingabefeld der Benutzeroberfläche des Treibers auswählt, Empfangen eines vom Treiber bereitgestellten regulären Ausdrucks durch die Tastaturapplikation, welcher Angaben zum Typ der erwarteten Eingabe, zum Format der erwarteten Eingabe, zum erlaubten Wertebereich der erwarteten Eingabe und zu erwarteten Trennzeichen umfasst. Des Weiteren umfasst das Verfahren Anpassen der von der Tastaturapplikation angezeigten virtuellen Tastatur entsprechend des regulären Ausdrucks, und Erfassen der Eingabe des Benutzers.

Indem der reguläre Ausdruck durch die Tastaturapplikation empfangen wird, kann die von der Tastaturapplikation angezeigte virtuelle Tastatur an die benötigte Eingabe angepasst werden. Es werden erfindungsgemäß nur diejenigen Eingabetasten angezeigt, die für die jeweilige Eingabe benötigt werden. Wenn eine numerische Eingabe benötigt wird, wird beispielsweise nur ein numerisches Tastenfeld angezeigt. Dies hat den Vorteil, dass die Anzeige der virtuellen Tastatur deutlich weniger Platz auf dem Display einnimmt als bisher. Die Displays von Mobilgeräte sind meist nicht allzu groß, und insofern trägt es zur Übersicht bei, wenn die virtuelle Tastatur nur die wirklich für die Eingabe erforderlichen Eingabetasten umfasst. Wenn beispielsweise nur das numerische Eingabefeld und nicht die komplette alphanumerische Eingabetastatur auf dem Display angezeigt wird, dann spart das Platz und als Folge davon wird die Eingabe für den Benutzer übersichtlicher.

Ein weiterer Vorteil ist, dass die Eingabe für den Benutzer auch komfortabler wird, weil er nur die wirklich benötigten Eingabetasten angezeigt bekommt. Darüber hinaus wird die Fehlerwahrscheinlichkeit bei den Eingaben des Benutzers verringert, denn dadurch, dass der Benutzer von vornherein eine angepasste und auf die benötigten Eingabetasten eingeschränkte virtuelle Tastatur angezeigt bekommt, wird die Möglichkeit von fehlerhaften Eingaben verringert. Dem Benutzer werden gewissermaßen die Möglichkeiten genommen, Fehleingaben zu tätigen.

Es ist von Vorteil, wenn die von einem Eingabefeld in der Benutzeroberfläche eines Treibers benötigten Eingaben z.B. mittels eines regulären Ausdrucks ("Regular Expression") beschrieben werden. Mit einem derartigen regulären Ausdruck können auf standardisierte Weise Angaben zum Typ einer Eingabe, zu den erlaubten Eingabetasten und Wertebereichen und zum Format der benötigten Eingabe gemacht werden.

Die Erfindung umfasst weiterhin einen Host, auf welchem eine Field Device Tool-Rahmenapplikatione installiert ist, wobei mit der Field Device Tool-Rahmenapplikation auf Komponenten eines Feldbussystems zugegriffen werden kann. In die Gerätezugriffssoftware sind ein oder mehrere Treiber entsprechend des Standards DTM, Device Type Manager, eingebunden, wobei jeder Treiber für den Zugriff auf eine Komponente des Feldbussystems vorgesehen ist. Die Gerätezugriffssoftware weist eine Tastaturapplikation auf. Die Tastaturapplikation ist dazu ausgelegt, von dem Treiber einen regulären Ausdruck zu empfangen, wenn ein Benutzer das Eingabefeld der Benutzeroberfläche des jeweiligen Treibers auswählt, und eine Anzeige einer virtuellen Tastatur entsprechend dem vom Treiber erhaltenen regulären Ausdruck anzupassen.

Bei dieser Field Device Tool-Rahmenapplikation wird die Tastaturapplikation in die Field Device Tool-Rahmenapplikation integriert. Dadurch ist es möglich, die angezeigte virtuelle Tastatur an die vom jeweiligen Eingabefeld einer Benutzeroberfläche eines Treibers benötigten Eingaben anzupassen.

Nachfolgend ist die Erfindung anhand von in der Zeichnung dargestellten Ausführungsbeispielen näher erläutert. Es zeigen:
Fig. 1 zeigt ein Feldbussystem zusammen mit einer zugehörigen Gerätezugriffssoftware;
Fig. 2A die Übergabe eines Regulären Ausdrucks von einem DTM an die Tastaturapplikation;
Fig. 2B die Eingabe einer ersten Ziffer des benötigten Grenzwerts;
Fig. 2C die Eingabe des Trennzeichens des benötigten Grenzwerts;
Fig. 2D die Eingabe der ersten und zweiten Ziffer nach dem Trennzeichen;
Fig. 3A eine Übersicht über die verschiedenen auf dem Host vorhandenen Softwarekomponenten gemäß dem Stand der Technik;
Fig. 3B eine Übersicht über die auf dem Host vorhandenen Softwarekomponenten, wobei auch die Tastaturapplikation dargestellt ist; und
Fig. 4 den Kommunikationsablauf bei Einsatz einer proprietären Tastaturapplikation.

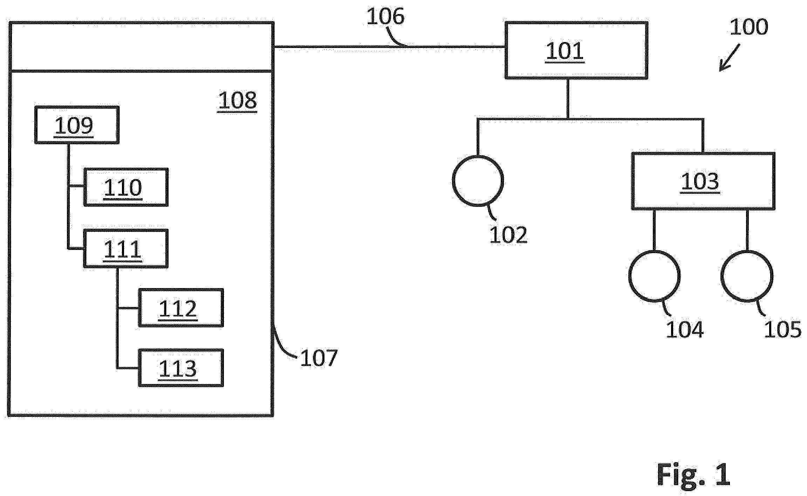

In Fig. 1 ist ein Feldbussystem 100 mit mehreren hierarchisch angeordneten Feldbussegmenten gezeigt. Das Feldbussystem 100 umfasst ein Feldzugangsgerät 101, ein Feldgerät 102 sowie einen Gateway 103. An dem Gateway 103 sind die beiden Feldgeräte 104, 105 angeschlossen.

An das Feldzugangsgerät 101 ist über eine Ethernet-Verbindung 106 ein Host 107 angeschlossen, auf dem eine Gerätezugriffssoftware 108 installiert ist. Über die Gerätezugriffssoftware 108 werden vom Host 107 aus die Komponenten des Feldbussystems 100 konfiguriert und parametriert. Insbesondere können von der Gerätezugriffssoftware 108 aus die Parameter der verschiedenen Komponenten des Feldbussystems 100 ausgelesen, dargestellt und verändert werden. Darüber hinaus ermöglicht die Gerätezugriffssoftware 108 eine Zustandsüberwachung (Condition Monitoring) der Komponenten des Feldbussystems 100. Der für diese Aufgaben erforderliche Datenaustausch wird in der Regel über den sogenannten azyklischen Datenverkehr abgewickelt.

Um die verschiedenen Komponenten des Feldbussystems 100 korrekt ansprechen zu können, benötigt die Gerätezugriffssoftware 108 Informationen über die Eigenschaften und Parameter der Feldgeräte, Gateways, Remote I/Os etc. des Feldbussystems 100. Diese Informationen werden von den Herstellern der unterschiedlichen Geräte in der Regel in Form von Gerätebeschreibungsdateien oder Gerätetreibern zur Verfügung gestellt. Zur Gerätebeschreibung für den azyklischen Datenaustausch werden bei den Feldbusprotokollen Profibus-DP, Profibus-PA, Fieldbus Foundation und HART Gerätebeschreibungen gemäß den Standards DD (Device Description), EDD (Enhanced Device Description), DTM (Device Type Manager) sowie FDI Device Packages verwendet. Insbesondere bei den Standards EDD und DTM werden zusätzlich zu Geräteparametern, Gerätefunktionalität und Adressraumbelegung auch Grafikfeatures und grafische Benutzeroberflächen spezifiziert, die die Parametrierung und Konfigurierung des jeweiligen Feldgeräts erleichtern sollen. Zur Erzeugung dieser grafischen Oberflächen sind im Standard EDD spezielle Grafikbefehle vorgesehen, die nach Art einer Interpreter-Sprache abgearbeitet werden.

Im Standard FDT/DTM wird eine ausführbare Datei (ein Executable) zur Verfügung gestellt, die als DTM (Device Type Manager) bezeichnet wird. Dieser DTM umfasst auch die genannten Grafikfeatures. Die verschiedenen DTMs zu den verschiedenen Komponenten des Feldbussystems werden in eine gemeinsame FDT-Rahmenapplikation eingebunden, wobei FDT für "Field Device Tool" steht. Dadurch wird eine gemeinsame Rahmenapplikation zur Verfügung gestellt, in die die DTMs zu verschiedenen Geräten und von unterschiedlichen Herstellern eingebunden werden können.

Der FDT-Standard wird in den nächsten Jahren zunehmend durch den Standard FDI Device Packages ergänzt und später eventuell ersetzt.

Neben den bisher diskutierten Feldbusprotokollen Profibus, Fieldbus Foundation und HART gewinnen die sogenannten Industrial Ethernet-Protokolle an Bedeutung, zu denen u.a. die Feldbusprotokolle EtherNet/IP, ProfiNet und EtherCAT gehören.

Beim Feldbusprotokoll EtherNet/IP ist eine Gerätebeschreibungsdatei entsprechend dem Standard EDS (Electronic Data Sheet) zur Beschreibung sowohl des zyklischen als auch des azyklischen Datenaustauschs vorgesehen.

Im Beispiel von Fig. 1 handelt es sich bei der Gerätezugriffssoftware 108 um eine FDT-Rahmenapplikation, in die zur Beschreibung des Feldbussystems 100 eine Anzahl von unterschiedlichen Geräte-DTMs, Gateway-DTMs und Kommunikations-DTMs eingebunden sind. An oberster Stelle der DTM-Hierarchie steht der Kommunikations-DTM 109. Der Kommunikations-DTM 109 ist dem Feldzugangsgerät 101 zugeordnet und kommuniziert mit diesem über die Ethernet-Verbindung 106. Der Kommunikations-DTM 109 stellt in gewisser Weise die Außenschnittstelle der Gerätezugriffssoftware 108 dar. Sämtlicher ein- und ausgehende Datenverkehr wird über den Kommunikations-DTM 109 geführt.

Der Geräte-DTM 110 ist in der DTM-Hierarchie unterhalb des Kommunikations-DTM 109 angeordnet und bildet die Funktionalität des Feldgeräts 102 ab. In der Ebene unterhalb des Kommunikations-DTM 109 ist außerdem ein Gateway-DTM 111 angeordnet, der dem Gateway 103 zugeordnet ist. Über den Gateway-DTM 111 kann der Gateway 103 parametriert und konfiguriert werden. Unterhalb des Gateway-DTM 111 in der DTM-Hierarchie sind zwei Geräte-DTMs 112, 113 angeordnet. Der Geräte-DTM 112 bildet die Funktionalität des Feldgeräts 104 ab, und der Geräte-DTM 113 bildet die Funktionalität des Feldgeräts 105 ab.

Wenn die Gerätezugriffssoftware 108, also beispielsweise eine FDT-Rahmenapplikation mit einer Mehrzahl von darin eingebundenen DTMs, auf einem konventionellen PC läuft, dann können die erforderlichen Tastatureingaben nach dem Anklicken eines Eingabefeldes mittels einer herkömmlichen Tastatur eingegeben werden. Um eine bequeme Parametrierung vor Ort zu ermöglichen, ist die Gerätezugriffssoftware 108 aber zunehmend auch auf mobilen Endgeräten, Tablets, etc. installiert, welche nicht über eine herkömmliche Tastatur verfügen. Bei derartigen Geräten erfolgen die Eingaben in die von einer DTM-Benutzeroberfläche bereitgestellten Eingabefelder über eine virtuelle Tastatur. Durch Antippen der entsprechenden Berührfelder auf dem Touchscreen können dann die entsprechenden Werte eingegeben werden.

Bei den Lösungen des Stands der Technik wurde diese virtuelle Tastatur vom Betriebssystem zur Verfügung gestellt, beispielsweise von Windows. Sobald der Benutzer ein bestimmtes Eingabefeld angeklickt hat, wurde dem Benutzer eine standardisierte virtuelle Tastatur angezeigt, mit der der Benutzer die jeweiligen Eingaben vornehmen konnte. Nach der Bestätigung der Eingabe, beispielsweise durch Drücken der Taste "Return", konnte die getätigte Eingabe in einem nachgelagerten Schritt einer Überprüfung unterzogen werden. Beispielsweise wurde überprüft, ob die eingegebenen Werte innerhalb von vorgegebenen Bereichsgrenzen lagen oder nicht.

Entsprechend der hier beschriebenen Lösung wird vorgeschlagen, in die Gerätezugriffssoftware eine proprietäre Tastaturapplikation einzubinden, welche die für Eingaben in die Eingabefelder benötigte virtuelle Tastatur zur Verfügung stellt. Nach dem Anklicken eines Eingabefeldes wird dann nicht mehr wie bisher die vom Betriebssystem bereitgestellte Standardtastatur angezeigt, sondern es wird vielmehr die von der proprietären Tastaturapplikation der Gerätezugriffssoftware bereitgestellte virtuelle Tastatur angezeigt. Dies bietet verschiedene Vorteile. Ein Vorteil ist, dass die dargestellte virtuelle Tastatur an die vom jeweiligen Eingabefeld erwarteten Daten angepasst werden kann. Dadurch können Fehleingaben des Benutzers von vornherein verhindert werden. Darüber hinaus kann die dargestellte virtuelle Tastatur auch im Verlauf der Eingabe ständig an die erwarteten Eingabewerte angepasst werden, beispielsweise, indem mögliche Eingabetasten ein- bzw. ausgeblendet werden.

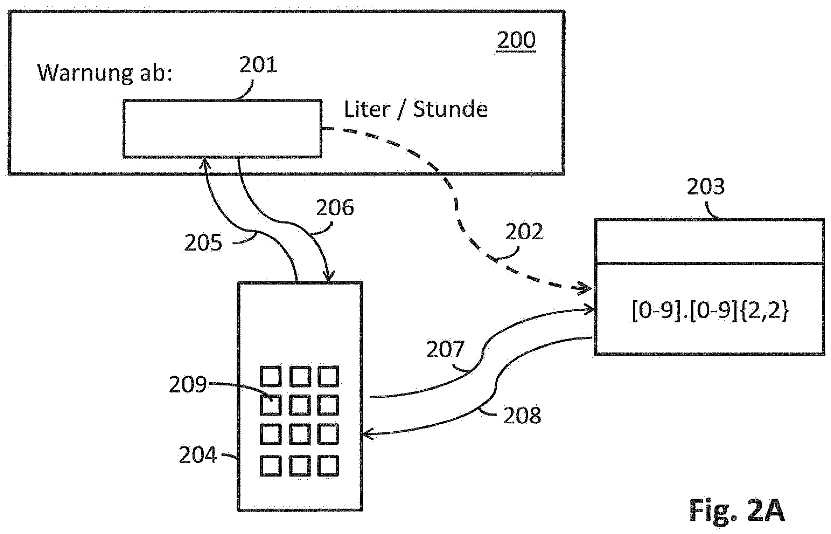

In Fig. 2A ist veranschaulicht, wie Informationen zum Typ, zum Format und zum Wertebereich der erwarteten Eingabe von einem DTM an die proprietäre Tastaturapplikation übergeben werden. Hierzu ist in Fig. 2A eine DTM-Benutzeroberfläche 200 gezeigt, die auf dem Bildschirm dargestellt wird. Innerhalb der DTM-Benutzeroberfläche 200 ist ein Eingabefeld 201 vorgesehen. In dieses Eingabefeld 201 soll bei dem dargestellten Beispiel ein oberer Grenzwert für den Durchfluss eingegeben werden, und zwar in Liter pro Stunde. Bei Überschreiten dieses oberen Grenzwerts wird dann eine Warnung angezeigt.

Bei dem oberen Grenzwert für den Durchfluss handelt es sich um eine Dezimalzahl im Format "x.xx" mit einem gültigen Wertebereich von 0.00 bis 9.99 Liter pro Stunde. Es stellt sich nun die Aufgabe, diese Angaben zu der im Eingabefeld 201 erwarteten Eingabe von der DTM an die Tastaturapplikation zu übergeben. Hierzu ist bei Microsoft Windows-Oberflächen ein Standardkonzept vorgesehen, entsprechend dem einem Eingabefeld ein zugehöriges Attribut zugeordnet werden kann. Die Verbindung zwischen dem Eingabefeld und dem zugehörigen Attribut wird dabei mittels eines Pointers hergestellt, der auf eine dem Eingabefeld zugeordnete Datenstruktur zeigt. Im Beispiels von Fig. 2A ist zum Eingabefeld 201 ein Pointer 202 abgelegt, der auf eine Datenstruktur 203 zeigt. In dieser Datenstruktur 203 können dann Angaben zum Typ der erwarteten Eingabe sowie zum Format und zum Wertebereich der erwarteten Eingabe gemacht werden. Diese Angaben können dann von der Tastaturapplikation 204 ausgelesen und verwendet werden.

Die Beschreibung von Typ, Format und Wertebereich der erwarteten Eingabe kann vorteilhafterweise mit Hilfe eines sogenannten "Regulären Ausdrucks" erfolgen. Als "Regulären Ausdruck" bzw. "Regular Expression", abgekürzt "RegExp" oder "RegEx" bezeichnet man in der Informatik einen Ausdruck, der zur Beschreibung von Mengen von Zeichenketten mit Hilfe bestimmter syntaktischer Regeln dient. Reguläre Ausdrücke werden beim Programmieren für diverse Problemlösungen verwendet, insbesondere dann, wenn es darum geht, Zeichenketten (Strings) zu bearbeiten, zu prüfen oder in ihnen etwas zu suchen. Neben Implementierungen in vielen Programmiersprachen verfügen auch viele Texteditoren über reguläre Ausdrücke, beispielsweise in der Funktion "Suchen und Ersetzen".

Im vorliegenden Beispiel soll mit Hilfe eines regulären Ausdrucks beschrieben werden, dass als Eingabe eine numerische Eingabe des Formats "x.xx" mit einem gültigen Wertebereich von 0.00 bis 9.99 erwartet wird. Der reguläre Ausdruck dafür lautet "[0-9].[0-9]{2,2}". Dieser reguläre Ausdruck bedeutet, dass als erstes Zeichen ein Zeichen von 0 bis 9 und anschließend ein "." erwartet wird. Der Ausdruck "{2,2}" bedeutet, dass nach dem Punkt mindestens zwei und maximal zwei Nachkommastellen erwartet werden, wobei der Ausdruck "[0-9]" bedeutet, dass der gültige Bereich für diese beiden Ziffern von 0 bis 9 geht.

Im Folgenden soll die Interaktion zwischen dem DTM 200 und der proprietären Tastaturapplikation 204, die als Teil der Gerätezugriffssoftware 108 implementiert ist, näher beschrieben werden. Es soll angenommen werden, dass der Benutzer auf dem Bildschirm, auf dem die DTM-Benutzeroberfläche 200 dargestellt wird, auf das Eingabefeld 201 klickt. Durch das Anklicken des Eingabefelds 201 wird zunächst die DTM-Benutzeroberfläche angesprochen, und von dort aus wird die Tastaturapplikation 204 aufgerufen. Die Tastaturapplikation 204 überprüft im Schritt 205, ob zu dem Eingabefeld 201 ein zusätzliches Attribut hinterlegt ist, auf das mittels eines Zeigers zugegriffen werden kann. Daraufhin wird im Schritt 206 die Tastaturapplikation 204 vom DTM 200 darüber informiert, dass es zu dem Eingabefeld 201 ein Attribut gibt, und der zu diesem Attribut gehörige Pointer 202 wird an die Tastaturapplikation 204 übermittelt. Im darauf folgenden Schritt 207 greift die Tastaturapplikation 204 mittels des Pointers 202 auf die Datenstruktur 203 zu. Im Schritt 208 wird die Datenstruktur 203 mit dem darin enthaltenen regulären Ausdruck "[0-9].[0-9]{2,2}" von der Tastaturapplikation 204 abgerufen und steht nun auf Seiten der Tastaturapplikation 204 zur Verfügung. Damit ist die Tastaturapplikation 204 jetzt darüber informiert, welche Art von Eingabe vom Eingabefeld 201 benötigt wird. Insbesondere ist die Tastaturapplikation 204 darüber informiert, dass im Eingabefeld 201 nur numerische Eingaben getätigt werden dürfen, wobei das Format "x.xx" einzuhalten ist, und wobei sich der zulässige Wertebereich von 0.00 bis 9.99 erstreckt. Aus diesem regulären Ausdruck leitet die Tastaturapplikation 204 ab, welche virtuellen Eingabetasten angezeigt werden sollen. Als virtuelle Tastatur wird daraufhin das numerische Tastenfeld 209 angezeigt.

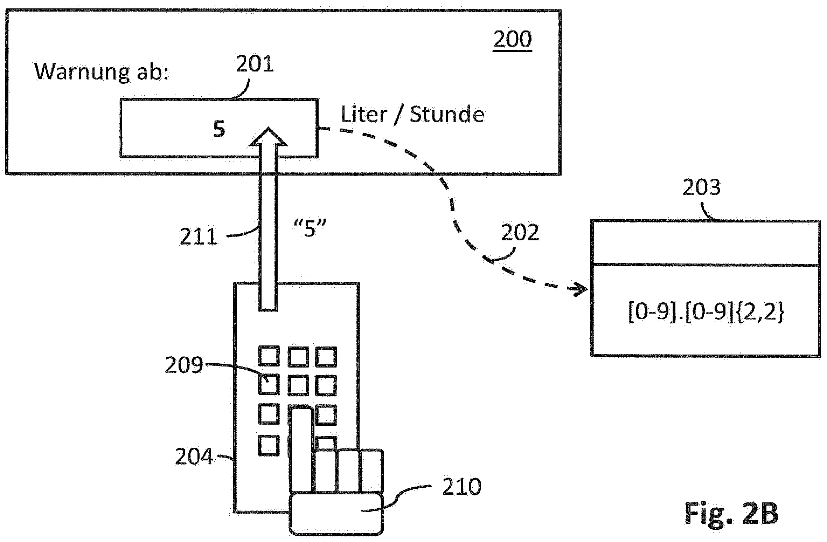

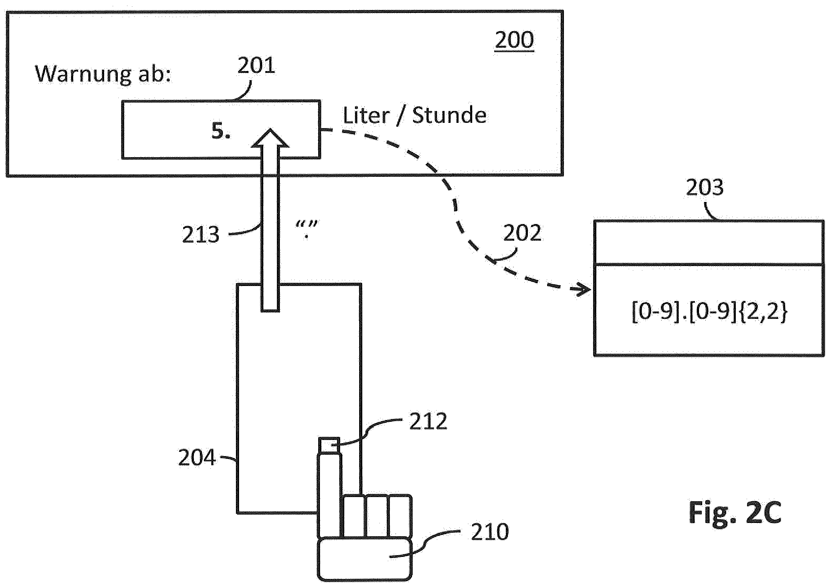

In Fig. 2B ist gezeigt, wie der Benutzer 210 die erste Ziffer eintippt. Der Benutzer 210 drückt dazu beispielsweise auf die Eingabetaste "5" des numerischen Tastenfelds 209. Diese Eingabe wird im Schritt 211 von der Tastaturapplikation 204 an das Eingabefeld 201 übergeben und von diesem übernommen. Die Ziffer "5" wird daraufhin im Eingabefeld 201 angezeigt. Auf Seiten der Tastaturapplikation 204 ist aus dem regulären Ausdruck das Format "x.xx" der erwarteten Eingabe bekannt. Auf Seiten der Tastaturapplikation 204 ist daher bekannt, dass als nächstes die Eingabe des Trennzeichens "." erforderlich ist. Wie in Fig. 2C gezeigt ist, wird das dargestellte Tastenfeld dementsprechend angepasst. Es wird nur mehr die "."-Taste 212 angezeigt, alle anderen Tasten werden ausgeblendet. Der Benutzer 210 betätigt nun die "."-Taste 212. Diese Eingabe wird im Schritt 213 an das Eingabefeld 201 gesendet und von diesem übernommen. Im Eingabefeld 201 wird nun "5." angezeigt.

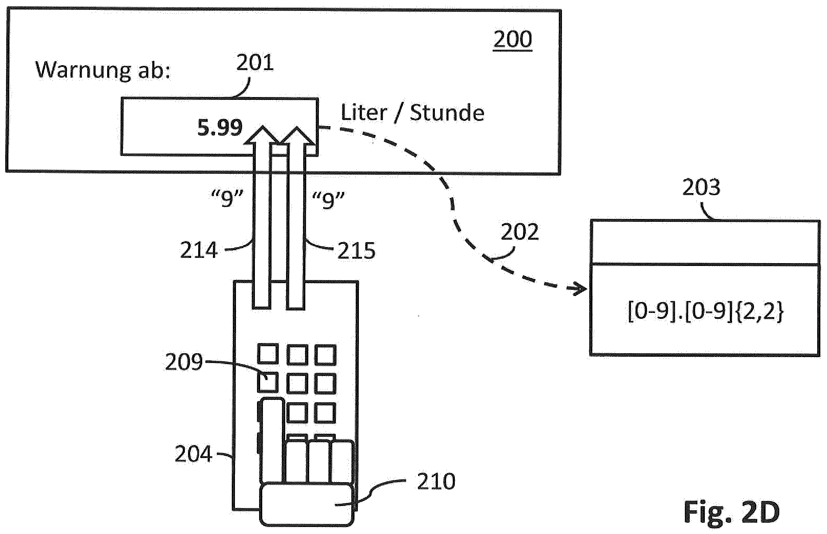

Auf Seiten der Tastaturapplikation 204 ist aus dem regulären Ausdruck erkennbar, dass als nächstes zwei Ziffern eingegeben werden müssen. Wie in Fig. 2D gezeigt ist, wird die virtuelle Tastatur so verändert, dass nun wieder sämtliche Zifferntasten aktiviert sind. Der Benutzer 210 gibt nun über das numerische Tastenfeld 209 die erste Ziffer nach dem Trennzeichen ein, beispielsweise die Ziffer "9". Die Eingabe wird im Schritt 214 an das Eingabefeld 201 übergeben und vom Eingabefeld übernommen. Im Eingabefeld 201 wird "5.9" angezeigt. Daraufhin gibt der Benutzer über das numerische Tastenfeld 209 die zweite Ziffer nach dem Trennzeichen ein, beispielsweise erneut die Ziffer "9". Diese Ziffer wird im Schritt 215 an das Eingabefeld 201 übergeben und vom Eingabefeld 201 übernommen. Am Ende wird im Eingabefeld 201 der gültige Wert "5.99" angezeigt. Innerhalb des DTM 200 kann nun optional in einem weiteren Überprüfungsschritt eine Validierung dieses eingegebenen Werts vorgenommen werden.

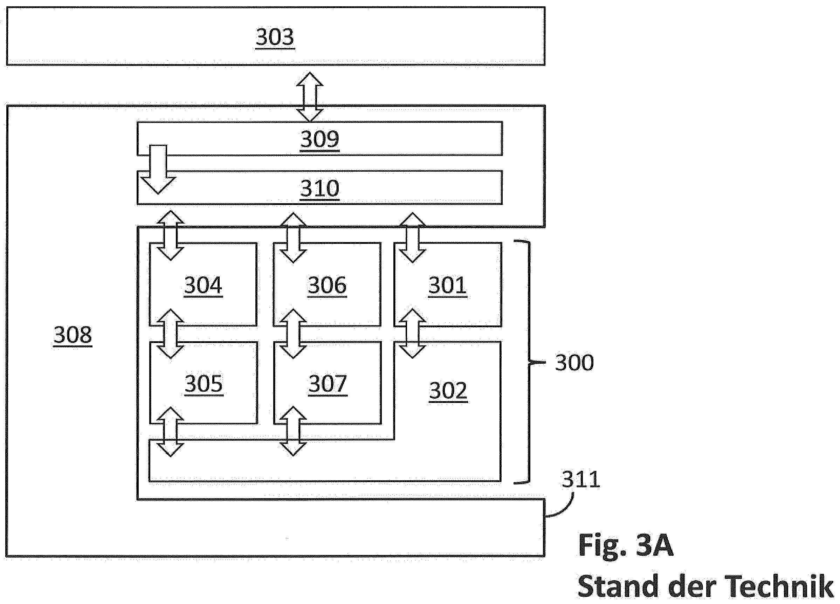

In Fig. 3A sind die verschiedenen auf dem Host 107 installierten Softwarekomponenten für eine Lösung des Stands der Technik gezeigt, bei der die virtuelle Tastatur vom Betriebssystem zur Verfügung gestellt wird. Das Betriebssystem verarbeitet auch die Tastatureingaben des Benutzers. Wie anhand von Fig. 3A zu erkennen ist, umfasst die auf dem Host installierte FDT-Rahmenapplikation 300 eine FDT-Benutzeroberfläche 301 und eine FDT-Ausführungsumgebung 302. Die FDT-Benutzeroberfläche 301 ist dazu ausgelegt, eine graphische Benutzerschnittstelle zur Verfügung zu stellen, über die der Benutzer 303 mit der FDT-Rahmenapplikation 300 kommunizieren kann. Die FDT-Ausführungsumgebung 302 dagegen dient zur Bereitstellung von Schnittstellen und zur Abwicklung der Kommunikation mit den verschiedenen DTMs, die in die FDT-Rahmenapplikation 300 eingebunden sind. Die in die FDT-Rahmenapplikation 300 einbindbaren Kommunikations-DTMs, Gateway-DTMs und Geräte-DTMs dienen als Treiber für die jeweiligen Feldgeräte bzw. Gateways des Feldbussystems.

Bei den in Fig. 3A gezeigten Beispiel sind zwei verschiedene DTMs in die FDT-Rahmenapplikation eingebunden, wobei jeder der DTMs zwei Teile umfasst. Der erste DTM umfasst eine DTM-Benutzeroberfläche 304 sowie eine darunter angeordnete DTM-Verarbeitungslogik 305. Ebenso umfasst der zweite DTM eine DTM-Benutzeroberfläche 306 sowie eine DTM-Verarbeitungslogik 307. Die DTM-Benutzeroberflächen 304, 306 sind z.B. jeweils dazu ausgebildet, eine graphische Benutzeroberfläche darzustellen, über die der Benutzer 303 auf das jeweilige Feldgerät bzw. den jeweiligen Gateway zugreifen kann. Die eigentliche Treiberfunktionalität des DTMs ist dagegen jeweils in der zugehörigen DTM-Verarbeitungslogik 305, 307 untergebracht.

Die Verarbeitung von Eingaben des Benutzers 303 sowie von Interaktionen des Benutzers 303 mit der FDT-Benutzeroberfläche 301 und den DTM-Benutzeroberflächen 304, 306 wird vom Betriebssystem 308 des Hosts 107 abgewickelt. Hierzu umfasst das auf dem Host 107 installierte Betriebssystem 308 eine Eingabeverarbeitungsschicht 309 sowie eine Interaktionsverarbeitungsschicht 310, die oberhalb der FDT-Benutzeroberfläche 301 und der DTM-Benutzeroberflächen 304, 306 angeordnet sind. Darüber hinaus umfasst das Betriebssystem 308 eine Hardwareabstraktionsschicht 311, welche beispielsweise verschiedene Hardwaretreiber zur Verfügung stellt. Insofern ist das in Fig. 3A gezeigte Betriebssystem 308 hufeisenförmig dargestellt, weil es zum einen die Eingabe- und Interaktionsverarbeitungsschichten 309, 310 umfasst, zum anderen aber auch die Hardwareabstraktionsschicht 311.

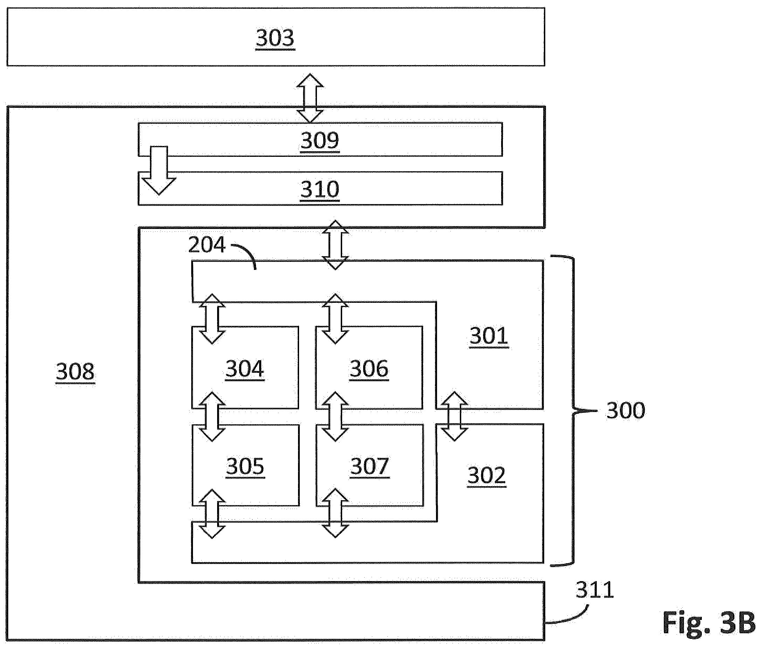

In Fig. 3B ist dargestellt, wie die bei den Ausführungsformen der vorliegenden Erfindung vorhandene proprietäre Tastaturapplikation 204 zu den auf dem Host 107 vorhandenen Softwarekomponenten hinzugefügt wird. Dabei sind in Fig. 3B identische oder funktionell ähnliche Komponenten mit denselben Bezugszeichen wie in Fig. 3A versehen. Anhand von Fig. 3B ist zu erkennen, dass die Tastaturapplikation 204 als Teil der FDT-Rahmenapplikation ausgebildet ist, und zwar als Teil der FDT-Benutzeroberfläche 301. Außerdem ist zu erkennen, dass die Tastaturapplikation 204 zwischen und den Eingabeverarbeitungs- und Interaktionsverarbeitungsschichten 309, 310 einerseits und den DTM-Benutzeroberflächen 304, 306 andererseits befindet. Dadurch kann erreicht werden, dass immer dann, wenn der Benutzer 303 auf ein Eingabefeld klickt, vom Betriebssystem 308 die proprietäre Tastaturapplikation 204 aufgerufen wird, die dann für die Darstellung einer geeignet angepassten virtuellen Tastatur und für die Verarbeitung der Benutzereingaben zuständig ist. Insbesondere wird durch die proprietäre Tastaturapplikation 204 eine ständige Anpassung und Nachführung der dargestellten aktivierten Eingabetasten an die benötigten Eingabeformate ermöglicht, welche vorzugsweise mittels einer Regular Expression spezifiziert werden.

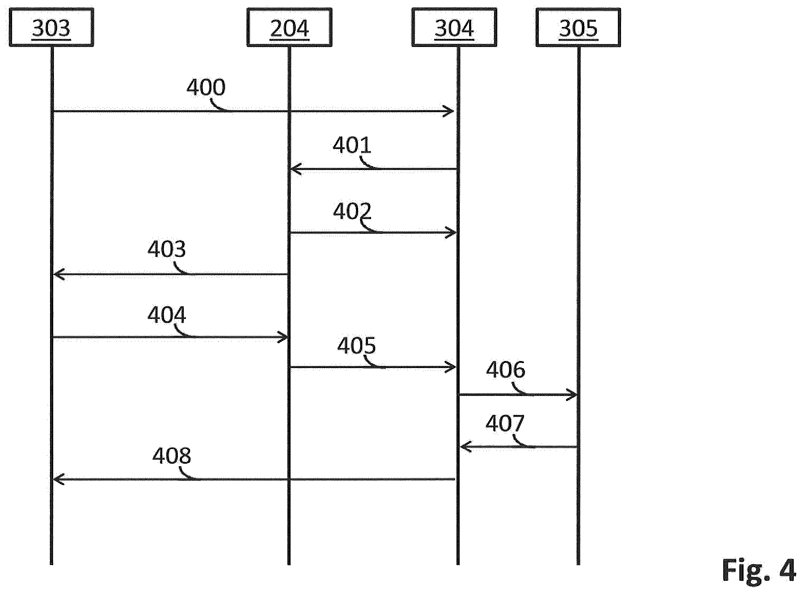

In Fig. 4 ist der gesamte Kommunikationsablauf bei Einsatz einer proprietären Tastaturapplikation im Überblick dargestellt. An diesem Kommunikationsablauf sind der Benutzer 303, die Tastaturapplikation 204, die DTM-Benutzeroberfläche 304 und die DTM-Verarbeitungslogik 305 beteiligt.

Im ersten Schritt 400 klickt der Benutzer 303 auf ein Eingabefeld der DTM-Benutzeroberfläche 304. Im Schritt 401 wird die Tastaturapplikation 204 über das Ereignis informiert, dass ein Eingabefeld der DTM-Benutzeroberfläche 304 angeklickt wurde. Im darauffolgenden Schritt 402 überprüft die Tastaturapplikation 204, ob die DTM-Benutzeroberfläche 304 Information zur Art der im Eingabefeld erwarteten Eingaben bereitstellt. Wenn das der Fall ist, ruft die Tastaturapplikation 204 der DTM-Rahmenapplikation 300 semantische Informationen zu Typ, Format und Wertebereich der im Eingabefeld erwarteten Eingaben von der DTM-Benutzeroberfläche 304 ab. Im vorliegenden Fall würde die Tastaturapplikation 204 die Information erhalten, dass eine numerische Eingabe in einem spezifischen Format erwartet wird. Die Tastaturapplikation 204 der FDT-Rahmenapplikation 300 zeigt daraufhin im Schritt 403 dem Benutzer 303 eine numerische Tastatur an. Der Benutzer 303 tippt daraufhin im Schritt 404 auf der numerischen Tastatur die Ziffer "1" ein, die von der Tastaturapplikation 204 erfasst wird. Im darauffolgenden Schritt 405 übergibt die Tastaturapplikation 204 die erfasste Eingabe (Ziffer "1") an die DTM-Benutzeroberfläche 304, welche diese Eingabe im Eingabefeld anzeigt.

Der Benutzer bestätigt seine Eingabe und stößt damit Schritt 406 an. Im Schritt 406 leitet die DTM-Benutzeroberfläche 304 die erhaltene Eingabe zusammen mit der Aufforderung, den Wertebereich zu überprüfen, an die DTM-Verarbeitungslogik 305 weiter. Auf Seiten der DTM-Verarbeitungslogik 305 wird geprüft, ob sich die Eingabe innerhalb der vorgegebenen Wertebereichsgrenzen befindet. Im Schritt 407 bestätigt die DTM-Verarbeitungslogik 305 der DTM-Benutzeroberfläche 304, dass sich die Eingabe im zulässigen Bereich bewegt, und im Schritt 408 bestätigt die DTM-Benutzeroberfläche 304 dem Benutzer 303, dass seine Eingabe akzeptiert wurde.

## Patentansprüche

1. Ein Verfahren zum Erfassen einer Eingabe in eine Benutzeroberfläche (200) eines Treibers, wobei der Treiber entsprechend des Standards Device Type Manager, DTM, ausgestaltet ist und in eine Field Device Tool-, FDT, Rahmenapplikation (108, 300) eingebunden ist, mit der auf Komponenten eines Feldbussystems (100) zugegriffen werden kann, wobei die Field Device Tool-Rahmenapplikation (108, 300) eine Tastaturapplikation (204) zur Anzeige einer virtuellen Tastatur umfasst und auf einem Host installiert ist, welcher ein Touchdisplay aufweist, wobei die Tastaturapplikation die virtuelle Tastatur auf dem Touchdisplay des Hosts anzeigt, wobei die Eingaben in die Benutzeroberfläche des Treibers über das Touchdisplay erfolgen, und wobei das Verfahren folgende Schritte aufweist:
- wenn der Benutzer (303) ein Eingabefeld (201) der Benutzeroberfläche (200) des Treibers auswählt, Empfangen eines vom Treiber bereitgestellten regulären Ausdrucks durch die Tastaturapplikation (204), wobei der reguläre Ausdruck Angaben zum Typ der erwarteten Eingabe, zum Format der erwarteten Eingabe, zum erlaubten Wertebereich der erwarteten Eingabe und zu erwarteten Trennzeichen umfasst;
- Anpassen der von der Tastaturapplikation (204) angezeigten virtuellen Tastatur entsprechend des vom Treiber erhaltenen regulären Ausdrucks, indem die von der Tastaturapplikation angezeigte virtuelle Tastatur eine Auswahl von betätigbaren Eingabetasten umfasst, die in Abhängigkeit von der Art der benötigten Eingabe ausgewählt werden;
- Erfassen der Eingabe des Benutzers (303); und
- Laufendes Anpassen der virtuellen Tastatur im fortschreitenden Verlauf der Eingabe an die an der jeweiligen Eingabeposition benötigten Eingabewerte, durch Ein- bzw. Ausblenden der betätigbaren Eingabetasten, wobei nur diejenigen Eingabetasten angezeigt werden, die für die jeweilige Eingabe benötigt werden, wobei alle anderen Eingabetasten ausgeblendet werden, und wobei das Format der jeweils erwarteten Eingabe aus dem regulären Ausdruck bekannt ist.

2. Verfahren nach Anspruch 1, **gekennzeichnet durch**:
eine Übergabe des regulären Ausdrucks erfolgt mittels eines Pointers, der vom Treiber an die Tastaturapplikation übergeben wird, wobei der Pointer auf eine Datenstruktur zeigt, die die Information zur Art der benötigten Eingabe enthält.

3. Verfahren nach einem der Ansprüche 1 oder 2, **gekennzeichnet durch** folgenden zusätzlichen Schritt:
Übermitteln der Eingabe des Benutzers von der Tastaturapplikation an den Treiber.

4. Verfahren nach einem der Ansprüche 1 bis 3, **dadurch gekennzeichnet, dass** die Tastaturapplikation als Komponente der Field Device Tool-Rahmenapplikation implementiert ist.

5. Verfahren nach einem der Ansprüche 1 bis 4, **dadurch gekennzeichnet, dass** es sich bei dem Host, auf dem die Field Device Tool-Rahmenapplikation installiert ist, um mindestens eines von folgenden handelt: ein Mobilgerät, ein Mobiltelefon, einen Tablet-Computer, einen PDA, einen Computer, einen Laptop, eine Datenbrille, eine Smartwatch.

6. Ein Host, auf dem eine Field Device Tool-, FDT, Rahmenapplikation (108, 300) installiert ist, mit der auf Komponenten eines Feldbussystems (100) zugegriffen werden kann,
- wobei der Host ein Touchdisplay aufweist,
- wobei in die Field Device Tool-Rahmenapplikation (108, 300) ein oder mehrere Treiber entsprechend des Standards Device Type Manager, DTM, eingebunden sind, wobei jeder Treiber für den Zugriff auf eine Komponente des Feldbussystems (100) vorgesehen ist,
- wobei die Field Device Tool-Rahmenapplikation (108, 300) eine Tastaturapplikation (204) aufweist, wobei die Tastaturapplikation dazu ausgelegt ist, die virtuelle Tastatur auf dem Touchdisplay des Hosts anzuzeigen, und wobei die Eingaben in die Benutzeroberfläche des Treibers über das Touchdisplay erfolgen, wobei die Tastaturapplikation (204) dazu ausgelegt ist,
- von dem Treiber einen regulären Ausdruck zu empfangen, wenn ein Benutzer (303) das Eingabefeld (201) der Benutzeroberfläche (200) des jeweiligen Treibers auswählt, wobei der reguläre Ausdruck Angaben zum Typ der erwarteten Eingabe, zum Format der erwarteten Eingabe, zum erlaubten Wertebereich der erwarteten Eingabe und zu erwarteten Trennzeichen umfasst,
- eine Anzeige einer virtuellen Tastatur entsprechend des vom Treiber erhaltenen regulären Ausdrucks anzupassen, indem die von der Tastaturapplikation angezeigte virtuelle Tastatur eine Auswahl von betätigbaren Eingabetasten umfasst, die in Abhängigkeit von der Art der benötigten Eingabe ausgewählt werden,
- eine Eingabe des Benutzers (303) zu erfassen, und
- die virtuelle Tastatur im fortschreitenden Verlauf der Eingabe durch Ein- bzw. Ausblenden der betätigbaren Eingabetasten an die an der jeweiligen Eingabeposition benötigten Eingabewerte laufend anzupassen, wobei nur diejenigen Eingabetasten angezeigt werden, die für die jeweilige Eingabe benötigt werden, wobei alle anderen Eingabetasten ausgeblendet werden, und wobei das Format der jeweils erwarteten Eingabe aus dem regulären Ausdruck bekannt ist.

## Claims

1. A procedure to record an entry in a user interface (200) of a driver, wherein the driver is designed according to the Device Type Manager, DTM, standard and is integrated in a Field Device Tool, FDT, framework application (108, 300) with which it is possible to access components of a fieldbus system (100), wherein the Field Device Tool framework application (108, 300) comprises a keyboard application (204) to display a virtual keyboard and is installed on a host, said host comprising a touch display, wherein the keyboard application displays the virtual keyboard on the touch display of the host, wherein the entries in the user interface of the driver are made by means of the touch display, and wherein the procedure comprises the following steps:
- when the user (303) selects an entry field (201) of the user interface (200) of the driver, the keyboard application (204) receives a regular expression provided by the driver, wherein the regular expression comprises information on the type of expected entry, the format of the expected entry, the permitted value range of the expected entry and on the expected separators;
- adaptation of the virtual keyboard displayed by the keyboard application (204) according to the regular expression received from the driver in that the virtual keyboard displayed by the keyboard application comprises a selection of touchable entry keys that are selected depending on the type of entry required;
- recording of the entry of the user (303), and
- continuous adaptation of the virtual keyboard, during the course of the entries, to the entry values required at the specific entry position by hiding or displaying the entry keys that can be touched, wherein only the entry keys that are required for the particular entry are displayed, wherein all other entry keys are hidden and wherein the format of the anticipated entry is known from the regular expression.

2. Procedure as claimed in Claim 1, **characterized by** the following point:
the regular expression is transferred by means of a pointer which is transferred by the driver to the keyboard application, wherein the pointer points to a data structure which contains the information on the type of entry that is required.

3. Procedure as claimed in one of the Claims 1 or 2, **characterized by** the following supplementary step:
Transmission of the entry of the user from the keyboard application to the driver.

4. Procedure as claimed in one of the Claims 1 to 3, **characterized in that** the keyboard application is implemented as a component of the Field Device Tool framework application.

5. Procedure as claimed in one of the Claims 1 to 4, **characterized in that** the host on which the Field Device Tool framework application is installed is at least one of the following systems: a mobile device, a mobile telephone, a tablet computer, a PDA, a computer, a laptop, smartglasses or a smartwatch.

6. A host on which a Field Device Tool, FDT, framework application (108, 300) is installed with which it is possible to access components of a fieldbus system (100),
- wherein the host comprises a touch display,
- wherein one or more drivers according to the Device Type Manager, DTM, standard are integrated in the Field Device Tool framework application (108, 300), wherein each driver is provided for access to a component of the fieldbus system (100),
- wherein the Field Device Tool framework application (108, 300) comprises a keyboard application (204), wherein the keyboard application is designed to display the virtual keyboard on the touch display of the host, and wherein the entries are made in the user interface of the driver via the touch display, wherein the keyboard application (204) is designed to
- receive a regular expression from the driver when a user (303) selects the entry field (201) of the user interface (200) of the specific driver, wherein the regular expression comprises information on the type of the expected entry, the format of the expected entry, the permitted value range of the expected entry and the expected separators,
- adapt the display of a virtual keyboard according to the regular expression received from the driver in that the virtual keyboard displayed by the keyboard application comprises a selection of touchable entry keys which are selected depending on the type of entry required,
- record the entry of the user (303), and
- continuously adapt the virtual keyboard, during the course of the entries, to the entry values required at the specific entry position by hiding or displaying the entry keys that can be touched, wherein only the entry keys that are required for the particular entry are displayed, wherein all other entry keys are hidden and wherein the format of the anticipated entry is known from the regular expression.

## Revendications

1. Procédé destiné à la saisie d'une entrée dans une interface utilisateur (200) d'un driver, le driver étant conçu selon la norme Device Type Manager, DTM, et étant intégré dans une application cadre (108, 300) Field Device Tool, FDT, laquelle application permet d' accéder à des composants d'un système de bus de terrain (100), l'application cadre Field Device Tool (108, 300) comprenant une application clavier (204) pour afficher un clavier virtuel et étant installée sur un hôte, lequel hôte comprend un écran tactile, l'application clavier affichant le clavier virtuel sur l'écran tactile de l'hôte, les entrées dans l'interface utilisateur du driver étant effectuées par l'intermédiaire de l'écran tactile, et le procédé comprenant les étapes consistant à :
- lorsque l'utilisateur (303) sélectionne un champ d'entrée (201) de l'interface utilisateur (200) du driver - recevoir par l'application clavier (204) une expression régulière fournie par le driver, l'expression régulière comprenant des indications sur le type d'entrée attendu, sur le format d'entrée attendu, sur la plage de valeurs autorisée de l'entrée attendue et sur les séparateurs attendus ;
- adapter le clavier virtuel affiché par l'application clavier (204) selon l'expression régulière reçue du driver, en ce que le clavier virtuel affiché par l'application clavier comprend une sélection de touches d'entrée utilisables, qui sont sélectionnées en fonction du type d'entrée requis ;
- saisir l'entrée de l'utilisateur (303), et
- adapter continuellement le clavier virtuel, au cours du déroulement progressif de l'entrée, aux valeurs d'entrée requises à la position d'entrée respective, en affichant ou en masquant les touches d'entrée utilisables, seules les touches d'entrée qui sont requises pour l'entrée respective étant affichées, toutes les autres touches d'entrée étant masquées, et le format de l'entrée respectivement attendue étant connu à partir de l'expression régulière.

2. Procédé selon la revendication 1, **caractérisé par** le point suivant :
un transfert de l'expression régulière se fait au moyen d'un pointeur qui est transféré du driver à l'application clavier, le pointeur pointant vers une structure de données qui contient les informations sur le type d'entrée requis.

3. Procédé selon l'une des revendications 1 ou 2, **caractérisé par** l'étape supplémentaire suivante :
Transmission de l'entrée de l'utilisateur de l'application clavier au driver.

4. Procédé selon l'une des revendications 1 à 3, **caractérisé en ce que** l'application clavier est mise en oeuvre en tant que composant de l'application cadre Field Device Tool.

5. Procédé selon l'une des revendications 1 à 4, **caractérisé en ce que** l'hôte, sur lequel l'application cadre Field Device Tool est installée, est au moins l'un parmi les systèmes suivants : un appareil mobile, un téléphone mobile, une tablette électronique, un PDA, un ordinateur, un ordinateur portable, des lunettes de données, une smartwatch.

6. Hôte, sur lequel est installée une application cadre (108, 300) Field Device Tool, FDT, qui peut être utilisée pour accéder aux composants d'un système de bus de terrain (100),
- l'hôte comprenant un écran tactile,
- un ou plusieurs driver correspondant au standard Device Type Manager, DTM, étant intégrés dans l'application cadre Field Device Tool (108, 300), chaque driver étant prévu pour accéder à un composant du système de bus de terrain (100),
- l'application cadre Field Device Tool (108, 300) comprenant une application clavier (204), l'application clavier étant conçue pour afficher le clavier virtuel sur l'écran tactile de l'hôte, et les entrées dans l'interface utilisateur du driver étant effectuées via l'écran tactile, l'application de clavier (204) étant conçue pour
- recevoir du driver une expression régulière lorsqu'un utilisateur (303) sélectionne le champ d'entrée (201) de l'interface utilisateur (200) du driver respectif, l'expression régulière comprenant des indications sur le type d'entrée attendu, sur le format d'entrée attendu, sur la plage de valeurs autorisée de l'entrée attendue et sur les séparateurs attendus,
- adapter l'affichage d'un clavier virtuel en fonction de l'expression régulière reçue du driver, en ce que le clavier virtuel affiché par l'application clavier comprend une sélection de touches d'entrée utilisables, qui sont sélectionnées en fonction du type d'entrée requis,
- saisir une entrée de l'utilisateur (303), et
- adapter continuellement le clavier virtuel, au cours du déroulement progressif de l'entrée, aux valeurs d'entrée requises à la position d'entrée respective, en affichant ou en masquant les touches d'entrée utilisables, seules les touches d'entrée qui sont requises pour l'entrée respective étant affichées, toutes les autres touches d'entrée étant masquées, et le format de l'entrée respectivement attendue étant connu à partir de l'expression régulière.
